# EUROPEAN PATENT APPLICATION

(11) **EP 1 462 717 A2**
(43) Date of publication of application: **29.09.2004**
(21) Application number: 04251681.5
(22) Date of filing: 24.03.2004
(51) Int. Cl.: F23D 14/32, F23D 14/22, F23D 21/00

(54) **Burner for the manufacture of synthetic quartz glass**

(30) Priority: 24.03.2003 JP 2003079399
(71) Applicant: SHIN-ETSU CHEMICAL CO., LTD., Chiyoda-ku, Tokyo (JP)
(72) Inventor: Shirota, Kazuo c/o Specialty Chem. Res. Center, Kubiki-mura Nakakubiki-gun Niigata-ken (JP); Otsuka, Hisatoshi c/o Specialty Chem. Res. Center, Kubiki-mura Nakakubiki-gun Niigata-ken (JP); Imai, Toshiki c/o Specialty Chem. Res. Center, Kubiki-mura Nakakubiki-gun Niigata-ken (JP)
(74) Representative: Stoner, Gerard Patrick

(57) **Abstract**

A burner for use in the manufacture of quartz glass is provided, which comprises a triple-tube assembly (1) of a center tube (2) for feeding a silane or siloxane compound, an intermediate tube (3) for feeding oxygen, and an outer tube (4) for feeding hydrogen, a first tubular shell (5) surrounding the triple-tube assembly for feeding hydrogen, a plurality of first nozzles (6) disposed within the first tubular shell for feeding oxygen, a second tubular shell (7) surrounding the first tubular shell for feeding hydrogen, and a plurality of second nozzles (8) disposed within the second tubular shell for feeding oxygen. Synthetic quartz glass ingots having high optical homogeneity are produced.

## Description

### BACKGROUND

### Technical Field

This invention relates to a burner for use in the manufacture of synthetic quartz glass ingots useful as the stock material for excimer laser synthetic quartz glass optical members. More particularly, it relates to a burner for use in the manufacture of synthetic quartz glass ingots having optical-grade high homogeneity and a minimal change of light transmittance and useful as optical members such as lenses, prisms, mirrors, windows and photomask substrates in excimer laser systems, especially ArF excimer laser systems.

### Background Art

To meet the recent trend of LSI toward higher integration, the photolithography of defining an integrated circuit pattern on a wafer requires an image exposure technique on the order of submicron units. For finer line width patterning, efforts have been made to reduce the wavelength of a light source of the exposure system. In the lithography, a KrF excimer laser (wavelength 248 nm) took over the prior art i-line (wavelength 365 nm) as the mainstream light source in steppers; and the practical use of an ArF excimer laser (wavelength 193 nm) has recently started. Then, the lens for use in steppers is required to have homogeneity, improved UV transmission, and resistance to UV irradiation.

In order to avoid contamination with metal impurities which cause UV absorption, the synthesis of quartz glass is generally carried out by introducing the vapor of a high purity silicon compound such as silicon tetrachloride directly into an oxyhydrogen flame. Flame hydrolysis takes place to form silica fines, which are directly deposited on a rotating heat-resistant substrate such as quartz glass while being melted and vitrified thereon. In this way, transparent synthetic quartz glass is produced.

The transparent synthetic quartz glass thus produced exhibits satisfactory light transmittance in the short-wavelength range down to about 190 nm. It has been utilized as materials capable of transmitting UV laser light, specifically i-line and excimer laser light such as KrF (248 nm), XeCl (308 nm), XeBr (282 nm), XeF (351 and 353 nm) and ArF (193 nm), and the four-fold harmonic wave (250 nm) of YAG.

The absorption of light in the UV region that is newly created by irradiating synthetic quartz glass with UV light having great energy as emitted by an excimer laser is deemed to be due to the paramagnetic defects formed through photo-reaction from intrinsic defects in synthetic quartz glass. Many light absorption bands due to such paramagnetic defects have been identified by ESR spectroscopy, for example, as E' center (Si·) and NBOHC (Si-O·).

The paramagnetic defects generally have an optical absorption band. When UV light is irradiated to quartz glass, the problematic absorption bands in the UV region due to paramagnetic defects in quartz glass are, for example, at 215 nm due to E' center (Si·) and 260 nm, which has not been accurately identified. These absorption bands are relatively broad and sometimes entail strong absorption. This is a serious problem when quartz glass is used as a transmissive material for ArF and KrF excimer lasers.

Intrinsic defects in synthetic quartz glass which cause paramagnetic defects arise from structures other than SiO₂ such as Si-OH and Si-Cl and oxygen-depleted or enriched structures such as Si-Si and Si-O-O-Si.

As the approach for suppressing paramagnetic defects, it is proposed in JP-A 6-199532 to use a chlorine-free alkoxysilane such as tetramethoxysilane as the silane compound for preventing Si-Cl, one of paramagnetic defects, from being incorporated in glass.

It is also known that if hydrogen molecules are present in quartz glass in a concentration above a certain level, few defects of E' center (Si·) which are oxygen-vecancies defects are formed, leading to improved durability to laser damage.

Since ArF excimer laser light causes several times serious damages to quartz glass as compared with KrF excimer laser light, the quartz glass for ArF laser application must have several times higher a hydrogen molecule concentration than the quartz glass for KrF laser application.

It is also proposed in JP-A 6-305736 to control the hydrogen molecule concentration in synthetic quartz glass. Depending on the energy using conditions of an ArF laser, the hydrogen molecular concentration in glass is adjusted.

Now that the efforts to reduce the wavelength of light source have reached excimer laser light having extremely greater energy than the traditional i-line light, active research works have been made on the laser durability of glass.

Exposure apparatus using such shorter wavelength light include many optical parts such as lenses, windows, prisms, and photomask-forming quartz glass substrates. With respect to projection lens materials among these optical parts used in exposure apparatus, the recent progress is toward a higher NA, the diameter of lens is annually increasing, and the optical homogeneity of lens material is required to be of higher precision. Especially for the ArF excimer laser, it is required that the initial transmittance of quartz glass, specifically the transmittance at wavelength 193.4 nm over the entire surface of an optical member be close to the theoretical value, the theoretical value at wavelength 193.4 nm being computed to be 99.85% by taking into account multiple reflection. Since the optical system in the exposure apparatus is composed of several to several tens of lenses, it is important that setting an initial transmittance of quartz glass even a little higher restrains the absorption of optical energy within the bulk of quartz glass, thereby minimizing a possibility that the light energy once absorbed is converted to thermal energy to incur a change of density and in some cases, a change of refractive index. In addition to the essential uniformity of refractive index, a reduction of birefringence becomes a crucial problem.

As stated above, in order to avoid contamination with metal impurities which cause UV absorption, the synthesis of quartz glass is generally carried out by introducing the vapor of a high purity organosilicon compound such as silicon tetrachloride directly into an oxyhydrogen flame. Flame hydrolysis takes place to form silica fines, which are directly deposited on a rotating heat-resistant substrate such as quartz glass and melted and vitrified thereon to form transparent synthetic quartz glass. The synthetic quartz glass ingot thus produced is sliced perpendicular to its growth direction whereupon a distribution of transmittance at wavelength 193.4 nm is determined in a plane of the growth direction. Then, the slice has an in-plane distribution, typically with the tendency that transmittance decreases from the center to the periphery. If the value required for the initial transmittance is at least 99.7% as an internal transmittance, for example, an effective portion of the synthetic quartz glass ingot that can be utilized, generally known as percent yield, is determined by this value. The inventors have intended to extend the effective portion over the entire region of the synthetic quartz glass ingot. Factors of the manufacturing process that substantially dictate the initial transmittance of a synthetic quartz glass ingot include a burner (structure and set conditions) which is an important constituent of the direct flame process, as well as a starting material or silane compound, a combustible gas (typically hydrogen) and a combustion-supporting gas (typically oxygen) fed thereto, and a balance of these gases. It has been found that the manufacturing process largely depends on the structure of burner among other factors.

An object of the invention is to provide a burner for use in the manufacture of synthetic quartz glass ingots which serve as the stock material for synthetic quartz glass members having high optical homogeneity useful as optical parts such as lenses, prisms, windows and photomask-forming quartz glass substrates in excimer laser systems.

In the manufacture of synthetic quartz glass ingots by vapor phase hydrolysis or oxidative decomposition of a silica-forming compound with the aid of an oxyhydrogen flame, the burner structure for forming a flame is important. The prior art burner is of the structure including a central triple-tube assembly, a tubular shell surrounding the triple-tube assembly, a plurality of nozzles disposed between the triple-tube assembly and the tubular shell, the foregoing components forming a main burner, and a tubular jacket disposed around the tubular shell and at the distal end of the main burner. Replacing the prior art burner by a burner for the manufacture of synthetic quartz glass comprising at least a central triple-tube assembly, a first tubular shell surrounding the triple-tube assembly, a plurality of first nozzles disposed between the triple-tube assembly and the first tubular shell and within the confine of the first tubular shell, a second tubular shell surrounding the first tubular shell, and a plurality of second nozzles disposed between the first and second tubular shells and within the confine of the second tubular shell, the present invention has succeeded in manufacturing synthetic quartz glass ingots from which synthetic quartz glass having high optical homogeneity is obtainable.

Accordingly, the present invention provides a burner for use in the manufacture of synthetic quartz glass, comprising a multi-tube assembly of a three or more tube construction including a center tube for feeding a silica-forming compound, a first outer tube surrounding the center tube for feeding a combustion-supporting gas, and a second outer tube surrounding the first outer tube for feeding a combustible gas; a first tubular shell surrounding the multi-tube assembly for feeding a combustible gas; a plurality of first nozzles disposed within the first tubular shell for feeding a combustion-supporting gas; a second tubular shell surrounding the first tubular shell for feeding a combustible gas; and a plurality of second nozzles disposed within the second tubular shell for feeding a combustion-supporting gas. The structure of the foregoing components is referred to as a main burner

In a preferred embodiment, the total cross-sectional area of gas discharge ports of the first nozzles disposed in the first tubular shell accounts for at least 5% of the cross-sectional area of an annular space between the multi-tube assembly and the first tubular shell. Also preferably, the total cross-sectional area of gas discharge ports of the second nozzles disposed in the second tubular shell accounts for at least 5% of the cross-sectional area of an annular space between the first and second tubular shells.

The burner may further comprise a tubular jacket disposed outside the main burner to surround at least an end portion thereof.

Methods of making synthetic quartz glass using burners as described herein are also part of our invention.

### BRIEF DESCRIPTION OF THE DRAWINGS

FIG. 1 schematically illustrates a burner for the manufacture of synthetic quartz glass in one embodiment of the invention, gas discharge ports of nozzles being depicted in cross section.
FIG. 2 schematically illustrates a burner for the manufacture of synthetic quartz glass in another embodiment of the invention, gas discharge ports of nozzles being depicted in cross section.
FIG. 3 schematically illustrates a prior art burner for the manufacture of synthetic quartz glass, gas discharge ports of nozzles being depicted in cross section.
FIG. 4 schematically illustrates an exemplary synthetic quartz glass manufacturing system.
FIG. 5 is a graph showing the transmittance distribution of synthetic quartz glass ingots of Example and Comparative Example.

### DESCRIPTION OF THE PREFERRED EMBODIMENTS

The burner for use in the manufacture of synthetic quartz glass ingots according to the invention comprises a main burner which includes a multi-tube assembly of a three or more tube construction, a first tubular shell surrounding the multi-tube assembly, a plurality of first nozzles disposed within the confine of the first tubular shell, a second tubular shell surrounding the first tubular shell, and a plurality of second nozzles disposed within the confine of the second tubular shell.

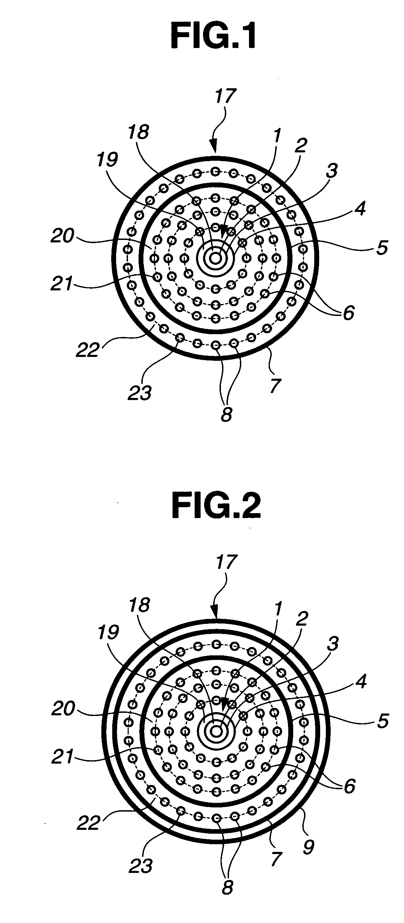

Referring to FIG. 1, a burner according to one embodiment of the invention is illustrated. A multi-tube assembly 1 has a triple-tube construction including a center tube 2, a first outer tube 3 surrounding the center tube 2 to define a second passage, and a second outer tube 4 surrounding the first outer tube 3 to define a third passage. The assembly 1 (here, a triple-tube assembly) is surrounded by first tubular shell 5. A plurality or array of multiple separate first nozzles 6 is distributed around between the first tubular shell 5 and the triple-tube assembly 1, within first tubular shell 5. The first tubular shell 5 is surrounded by a second tubular shell 7. A plurality or array of multiple second nozzles 8 is distributed around between the tubular shells 7,5 within the confine of the second tubular shell 7. This burner is referred to as a main burner. All tubes are shaped cylindrical and arranged in a concentric fashion, though not critical. The nozzles 6,8 are side-by-side with spaced axes.

Through the center tube 2, a silica-forming compound is fed and channeled, and generally oxygen gas or carrier gas is additionally fed and channeled. Through the second passage (within the confine of the first outer tube 3), a combustion-supporting gas such as oxygen is fed and channeled. Through the third passage (within the confine of the second outer tube 4), a combustible gas such as hydrogen is fed and channeled. Through the nozzles 6 and 8, a combustion-supporting gas such as oxygen is fed and channeled. Through the first and second tubular shells 5 and 7, a combustible gas such as hydrogen is fed and channeled to flow about the nozzles 6 and 8.

FIG. 2 illustrates a burner in another embodiment of the invention. The burner includes a tubular jacket 9 which is disposed outside the main burner, specifically outside the second tubular shell 7 so as to radially surround a distal end portion of the main burner and axially project a distance beyond the distal end of the main burner. The main burner is the same as illustrated in FIG. 1.

In a preferred embodiment, the total cross-sectional area of gas discharge ports of the plurality of first nozzles 6 disposed in the first tubular shell 5, that is, the total cross-sectional area of lumens of nozzles 6, accounts for at least 5%, more preferably 5 to 20%, and most preferably 8 to 13% of the cross-sectional area of a gas discharge region between the triple-tube assembly 1 and the first tubular shell 5, that is, the cross-sectional area of an annular space between the assembly 1 and the shell 5 (i.e., the cross-sectional area of an entire annular space between the assembly 1 and the shell 5 provided that the first nozzles 6 are omitted).

In a further preferred embodiment, the total cross-sectional area of gas discharge ports of the plurality of second nozzles 8 disposed in the second tubular shell 7, that is, the total cross-sectional area of lumens of nozzles 8, accounts for at least 5%, more preferably 5 to 20%, and most preferably 8 to 13% of the cross-sectional area of a gas discharge region between the first and second tubular shells 5 and 7, that is, the cross-sectional area of an annular space between the shells 5 and 7 (i.e., the cross-sectional area of an entire annular space between the shells 5 and 7 provided that the second nozzles 8 are omitted).

The number of first and second nozzles 6 and 8 may be determined, respectively, in accordance with the above conditions.

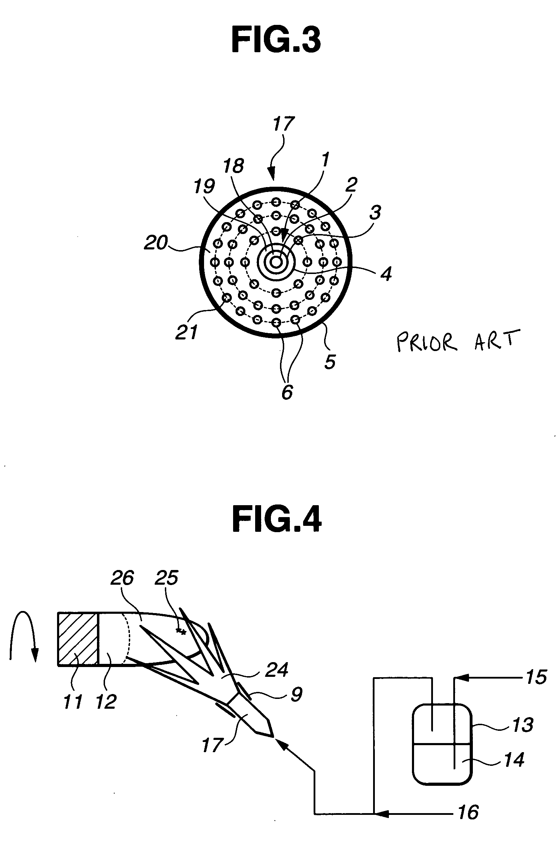

As compared with the prior art burner structure illustrated in FIG. 3 wherein like parts are designated with the same reference numerals as in FIGS. 1 and 2 and the description thereof is omitted, the structure comprising the second tubular shell surrounding the first tubular shell and a group of second nozzles disposed between the first and second tubular shells ensures, particularly when the proportion of the cross-sectional area of second nozzles is at least 5%, that in the manufacture of a synthetic quartz glass ingot by the direct flame process, the melting face temperature distribution as observed from the center to the periphery of an ingot growth face is a uniform one in which the high-temperature zone at the center is extended over the periphery. Then, during the deposition, melting and vitrification of silica fines on the ingot growing/melting face, a silica structure is formed under identical conditions from the center to the periphery. This enables ingot formation without lowering the initial transmittance of the ingot at the periphery relative to the initial transmittance at the center, minimizing transmittance variations.

The provision of the second tubular shell around the first tubular shell of the prior art burner structure ensures that in a flame produced by the present burner, the high-temperature region is extended from inside flame to outside flame. This outside flame is applied to a peripheral portion of the ingot melting/growing face. The provision of a plurality of second nozzles between the first and second tubular shells ensures to increase the combustion efficiency of a combustible gas such as hydrogen gas fed around the nozzle group, making it possible to extend the high-temperature region throughout the flame. This is particularly true when the proportion of the cross-sectional area of second nozzles is at least 5% and/or when the proportion of the cross-sectional area of first nozzles disposed between the multi-tube assembly and the first tubular shell is at least 5%. Further, the provision of the tubular jacket surrounding the end portion of the main burner prevents the flame from being disordered by gas streams within the furnace, concentrating the flame power.

Using the burner of the invention, a synthetic quartz glass ingot is produced. Preferably the ingot has an internal transmittance at wavelength 193.4 nm of at least 99.70% over the entire surface of a slice when the ingot is sliced perpendicular to its axis. Also preferably the glass has an OH group content of 500 to 1,300 ppm, especially 800 to 900 ppm. Moreover, a hydrogen molecule concentration of at least 3×10¹⁸ molecules/cm³, preferably 3×10¹⁸ to 6×10¹⁸ molecules/cm³, most preferably 3×10¹⁸ to 5×10¹⁸ molecules/cm³ is desirable for good resistance to laser damage.

Now it is described how to produce a synthetic quartz glass ingot using burners as proposed. A silica-forming compound, a combustible gas such as hydrogen gas, and a combustion-supporting gas such as oxygen gas are separately fed to the tubes of the burner to form an oxyhydrogen flame with which the compound undergoes vapor phase hydrolysis or oxidative decomposition to form silica fines which deposit on the target. The silica fines are simultaneously melted and vitrified to form a synthetic quartz glass ingot.

The starting material, silica-forming compound used herein is typically an organosilicon compound which is preferably selected from silane compounds and siloxane compounds represented by the following general formulae (1), (2) and (3).

(R¹)ₙSi(OR²)₄₋ₙ (1)

Herein each of R¹ and R², which may be the same or different, is a monovalent aliphatic hydrocarbon group, hydrogen or halogen atom and n is an integer of 0 to 4. 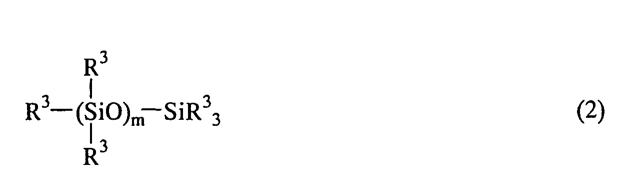 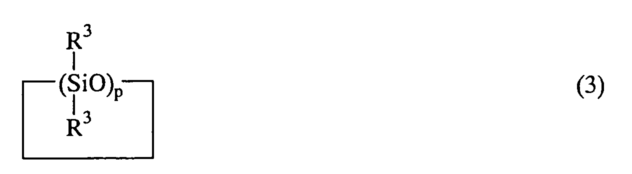 Herein R³ is hydrogen or a monovalent aliphatic hydrocarbon group, m is an integer of at least 1, especially 1 or 2, and p is an integer of 3 to 5.

Examples of the monovalent aliphatic hydrocarbon groups represented by R¹, R² and R³ include alkyl groups of 1 to 4 carbon atoms, such as methyl, ethyl, propyl, n-butyl and tert-butyl, cycloalkyl groups of 3 to 6 carbon atoms such as cyclohexyl, and alkenyl groups of 2 to 4 carbon atoms such as vinyl and allyl.

Examples of the silane compound represented by formula (1) include SiCl₄ , CH₃SiCl₃, Si(OCH₃)₄ , Si(OCH₂CH₃)₄, and CH₃Si(OCH₃)₃. Examples of the siloxane compounds represented by formulae (2) and (3) include hexamethyldisiloxane, hexamethylcyclotrisiloxane, octamethylcyclotetrasiloxane, and decamethylcyclopentasiloxane.

The silane or siloxane compound, a combustible gas (e.g., hydrogen, carbon monoxide, methane or propane) and a combustion-sustaining gas (e.g., oxygen) are fed to the burner for forming an oxyhydrogen flame.

An apparatus for producing a synthetic quartz glass ingot using the inventive burner may be of either vertical or lateral type.

As stated above, the synthetic quartz glass ingot produced using the inventive burner preferably has an internal transmittance at wavelength 193.4 nm of at least 99.70%. The reason is that when the ingot is finally used as an optical member, it is sometimes required that the transmittance at the service wavelength which is 193.4 nm in the case of an ArF excimer laser, for example, be at least 99.70% in internal transmittance. If the internal transmittance is less than 99.70%, there is a possibility that when ArF excimer laser light is transmitted by a quartz glass member, light energy is absorbed and converted to thermal energy, which can cause changes in the density of the glass and also alter its refractive index. For instance, the use of a synthetic quartz glass ingot having an internal transmittance of less than 99.70% as a lens material for an exposure system which employs an ArF excimer laser as the light source may give rise to undesirable effects such as distortion of the image plane (or field curvature) due to changes in the refractive index of the lens material.

Thus, the burner must be configured and arranged as described above. For optimum operation of the burner, the silica-forming compound and oxygen are fed to the burner in such a mixing ratio that the molar amount of the silica-forming compound is at least 1.3 times, especially 2.0 to 3.0 times, the stoichiometric amount of oxygen.

Additionally, the molar ratio of the actual amount of oxygen to the stoichiometric amount of oxygen needed for the silica-forming compound (silane or siloxane compound) and hydrogen fed to the burner is preferably in a range of 0.6 to 1.3, more preferably 0.7 to 0.9.

The vitrifying temperature has a distribution on the growth face. By setting a minimum temperature at this time to at least 1800°C, preferably at least 2000°C (with an upper limit of up to 2500°C, preferably up to 2400°C), the region of synthetic quartz glass which has an internal transmittance at wavelength 193.4 nm of at least 99.70% can be enlarged. The use of the inventive burner and the setting of an optimum gas balance such as that between oxygen and hydrogen greatly contribute to the melting and vitrifying temperature at the growth face.

With respect to the transmittance versus the melting and vitrifying temperature at the growth face, the inventors have discovered that the melting face temperature exerts an influence on the transmittance at wavelengths shorter than 200 nm, especially at the wavelength of ArF excimer laser light (193.4 nm). Thus, at a higher melting and vitrifying temperature, it is possible to maintain an internal transmittance of at least 99.70%. Moreover, within this range of conditions, it is possible to maintain the hydrogen molecule concentration in the synthetic quartz glass at a level of at least 3×10¹⁸ molecules/cm³ and thus achieve a long-term stability (sufficient to restrain the transmittance from lowering) during excimer laser irradiation.

After a synthetic quartz glass ingot is produced, it is processed as by cylindrical grinding, thermoformed into a rectangular block as a mask substrate by heat melting at a temperature in the range of 1700 to 1800°C, annealed at a temperature in the range of 1000 to 1300°C for strain relief, sliced and polished, completing a synthetic quartz glass substrate. When the synthetic quartz glass ingot is used as optical lens material, it is subjected to homogenizing treatment, obtaining synthetic quartz glass free of striae in three directions. Specifically, both ends of a synthetic quartz glass ingot are welded to synthetic quartz glass supporting rods held in a lathe and the ingot is drawn out to a diameter of 80 mm. One end of the ingot is then strongly heated with an oxyhydrogen burner to at least 1,700°C, and preferably at least 1,800°C, so as to form a molten zone. Then, the opposed chucks are rotated at different speeds to apply shear stress to the molten zone, thereby homogenizing the quartz glass ingot. At the same time, the burner is moved from one end of the ingot to the other end so as to homogenize the hydroxyl group concentration and hydrogen concentration within the ingot growth face (homogenization by the zone melting method). The resulting synthetic quartz glass is typically shaped to the desired dimensions, and then preferably annealed for the glass to take a uniform fictive temperature (FT). Annealing can be carried out by a conventional method.

Synthetic quartz glass members thus obtained are useful as optical quartz glass members including synthetic quartz glass substrates for photomasks, stepper illumination system lenses, projection optical system lenses, windows, mirrors, beam splitters and prisms in the excimer laser lithography.

### EXAMPLE

The following examples are provided to illustrate the invention, and are not intended to limit the scope thereof.

It is noted that in Examples, an internal transmittance was measured by ultraviolet spectrophotometry (Cary 400 by Varian Corp.).

### Example and Comparative Example

A synthetic quartz glass ingot was produced by feeding methyltrimethoxysilane as the starting material to an inventive burner (FIG. 1) or a prior art burner (FIG. 3), effecting oxidative or combustion decomposition of the silane in an oxyhydrogen flame to form fine particles of silica, then depositing the silica particles on a rotating quartz target while melting and vitrifying them at the same time.

Specifically, as shown in FIG. 4, a quartz glass target 12 was mounted on a rotating support 11. Argon gas 15 was introduced into the methyltrimethoxysilane 14 held in a starting material vaporizer 13. Methyltrimethoxysilane 14 vapor was carried out of the vaporizer by the argon gas 15, and oxygen gas 16 was added to the silane-laden argon to form a gas mixture, which was then fed to the center tube of a main burner 17. As shown in FIGS. 1 and 3, the main burner 17 was also fed the following gases, in outward order from the foregoing gas mixture at the center: oxygen gas 18, hydrogen gas 19, hydrogen gas 20, oxygen gas 21, hydrogen gas 22 and oxygen gas 23. The starting material, methyltrimethoxysilane 14 and an oxyhydrogen flame 24 were discharged from the main burner 17 toward the target 12. Fine particles of silica 25 were deposited on the target 12 and simultaneously melted and vitrified as clear glass, forming a synthetic quartz glass ingot 26. The ingot thus obtained had a diameter of 140 mm and a length of 500 mm. The parameters of the burners of Example and Comparative Example including the cross-sectional areas of tubes or nozzles, their ratio and gas feed rates are shown in Table 1.

**Table 1**

| | | Example (FIG. 1) | | Comparative Example (FIG. 3) | |
|---|---|---|---|---|---|
| | Gas | Cross-sectional area (mm²) | Gas flow rate (Nm³/hr) | Cross-sectional area (mm²) | Gas flow rate (Nm³/hr) |
| Center tube | Silane | 15 | 0.4 | 13 | 0.4 |
| | O₂ | | 3.0 | | 2.0 |
| | Ar | | 0.1 | | 0.1 |
| 1st outer tube | O₂ | 30 | 1.0 | 32 | 1.0 |
| 2nd outer tube | H₂ | 50 | 14.0 | 60 | 15.0 |
| 1st shell | H₂ | 1,700 | 24.0 | 1,800 | 25.0 |
| 1st nozzles | O₂ | 150 | 12.0 | 80 | 16.0 |
| 2nd shell | H₂ | 1,550 | 15.0 | - | |
| 2nd nozzles | O₂ | 150 | 10.0 | - | |
| Cross-sectional area ratio (%) | 1st nozzles | 8.8 | | 4.4 | |
| | 2nd nozzles | 9.7 | | - | |
| Note: Cross-sectional area ratio is a percentage of the total cross-sectional area of lumens of first nozzles divided by the cross-sectional area of an annular space (prior to nozzle arrangement) between the second outer tube and the first tubular shell; or a percentage of the total cross-sectional area of lumens of second nozzles divided by the cross-sectional area of an annular space (prior to nozzle arrangement) between the first and second tubular shells. | | | | | |

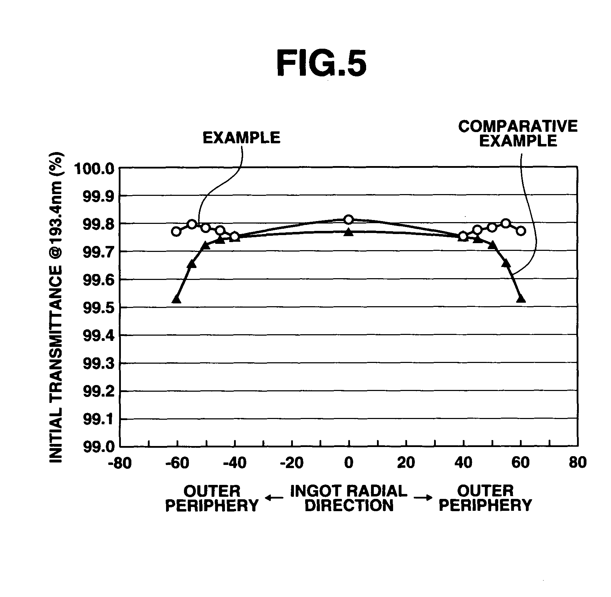

Next, the synthetic quartz glass ingots produced in Example and Comparative Example were sliced. Each slice was mirror finished. The distribution of initial transmittance at 193.4 nm of the slice from the center to the periphery was measured by ultraviolet spectrophotometry (Cary 400 by Varian Corp.). The results are shown in FIG. 5.

As described above and demonstrated in the examples, the burner of the invention can be run to produce synthetic quartz glass ingots from which can be produced optical-grade high-homogeneity synthetic quartz glass elements for excimer laser applications, particularly ArF excimer laser applications, laser damage-resistant optical elements and optical elements of other types used with light sources such as excimer lasers, and UV optical fibers.

## Claims

1. A burner for use in the manufacture of synthetic quartz glass, comprising a main burner comprising
a multi-tube assembly of a three or more tube construction including a center tube for feeding a silica-forming compound, a first outer tube surrounding the center tube for feeding a combustion-supporting gas, and a second outer tube surrounding the first outer tube for feeding a combustible gas,
a first tubular shell surrounding the multi-tube assembly for feeding a combustible gas,
a plurality of first nozzles disposed within the first tubular shell for feeding a combustion-supporting gas,
a second tubular shell surrounding the first tubular shell for feeding a combustible gas, and
a plurality of second nozzles disposed within the second tubular shell for feeding a combustion-supporting gas.

2. The burner of claim 1 wherein the total cross-sectional area of gas discharge ports of the first nozzles disposed in the first tubular shell accounts for at least 5% of the cross-sectional area of an annular space between the multi-tube assembly and the first tubular shell.

3. The burner of claim 1 or 2 wherein the total cross-sectional area of gas discharge ports of the second nozzles disposed in the second tubular shell accounts for at least 5% of the cross-sectional area of an annular space between the first and second tubular shells.

4. The burner of any one of claims 1 to 3, further comprising a tubular jacket disposed outside the main burner to surround at least an end portion thereof.

5. Method of manufacture of synthetic quartz glass using a burner according to any one of claims 1 to 4.
